(19) Europäisches Patentamt
European Patent Office
Office européen des brevets

(11) Veröffentlichungsnummer: **0 009 755**
**B1**

(12) # EUROPÄISCHE PATENTSCHRIFT

(45) Veröffentlichungstag der Patentschrift: **22.12.82**

(21) Anmeldenummer: **79103634.6**

(22) Anmeldetag: **25.09.79**

(51) Int. Cl.[3]: **C 08 G 18/32,** C 08 G 18/50, C 08 G 18/65, C 09 D 3/72, C 08 G 18/08

(54) **Verwendung von gegebenenfalls Äthergruppen aufweisenden Hydroxylalkylaminen bzw. derer Salze als den Wasserdampfdiffusionswiderstand reduzierende Zusätze in Beschichtungsmitteln auf Polyurethanbasis.**

(30) Priorität: **05.10.78 DE 2843377**

(43) Veröffentlichungstag der Anmeldung: **16.04.80 Patentblatt 80/8**

(45) Bekanntmachung des Hinweises auf die Patenterteilung: **22.12.82 Patentblatt 82/51**

(84) Benannte Vertragsstaaten: **AT BE CH DE FR GB IT NL SE**

(56) Entgegenhaltungen:
**FR-A-2 118 001**
**US-A-2 966 472**
**US-A-3 245 827**
**US-A-3 264 134**
**US-A-3 781 238**

(73) Patentinhaber: **BAYER AG, Zentralbereich Patente, Marken und Lizenzen, D-5090 Leverkusen 1, Bayerwerk (DE)**

(72) Erfinder: **Kubitza, Werner, Eduard-Spranger-Strasse 22, D-5090 Leverkusen 3 (DE)**
Erfinder: **Mennicken, Gerhard, Dr., Am Wasserturm 16, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 009 755 B1

# Verwendung von gegebenenfalls Äthergruppen aufweisenden Hydroxylalkylaminen bzw. derer Salze als den Wasserdampfdiffusionswiderstand reduzierende Zusätze in Beschichtungsmitteln auf Polyurethanbasis

Für den Anstrich mineralischer Baustoffoberflächen werden, besonders im Bereich der Fassaden, Dispersionsanstrichmittel auf Basis von Polyvinylacetat, Polyvinylpropionat, Styrol-Butadien oder Acrylsäureester-Styrol oder auch Lösungsmittel enthaltende Anstrichmittel auf Basis von Acrylsäureester-Copolymeren eingesetzt.

Dispersionsanstriche haben den Nachteil der verhältnismässig schnellen Verschmutzung sowie oft auch der schnellen Kreidung und des damit einhergehenden Filmabbaues.

Anstriche auf der Basis der zitierten Dispersionen sowie der lösungsmittelhaltigen Copolymeren haben den Nachteil der geringen Chemikalien- und insbesondere Lösungsmittelfestigkeit, was u.a. bei der Entfernung von Wandverschmutzungen mit aggressiven Reinigungsmitteln und organischen Lösungsmitteln hinderlich ist. Aus diesen Gründen werden schon seit mehreren Jahren in begrenztem Umfang Polyurethansysteme für den Fassdenanstrich eingesetzt. Hohe Wetterbeständigkeit, gute Oberflächenglätte, geringe Verschmutzungsneigung, hohe Chemikalienbeständigkeit und leichte Reinigungsfähigkeit werden dabei als die wesentlichen Vorteile geschätzt.

Lichtbeständige, aliphatische Polyurethan-Anstriche sind indessen mit dem Nachteil verhältnismässig hoher Wasserdampfdiffusionswiderstandfaktoren μ (DIN 52 615) behaftet, so dass sie nicht für alle Arten von Wandkonstruktionen eingesetzt werden können. (Klopfer: Wassertransport durch Diffusion in Feststoffen, Seiten 115–122, Bauverlag GmbH, Wiesbaden und Berlin (1974).

Es war somit Aufgabe der Erfindung, Polyurethanformulierungen zur Verfügung zu stellen, die eine im Vergleich zu den bisher verwendeten Polyurethan-Anstrichen erheblich verbesserte Wasserdampfdurchlässigkeit zeigen, so dass die Anstrichsysteme auch zur Beschichtung von solchen Substraten und Wandkonstruktionen einsetzbar sind, bei denen es auf einen äusserst geringen Diffusionswiderstand ankommt, ohne dass hierdurch die bekannten vorteilhaften Eigenschaften von Beschichtungsmitteln auf Polyurethanbasis bzw. von hieraus hergestellten Beschichtungen nachteilhaft beeinflusst werden.

Diese Aufgabe konnte überraschenderweise durch Verwendung der nachstehend näher beschriebenen Zusatzmittel gelöst werden.

Gegenstand der vorliegenden Erfindung ist die Verwendung von gegebenenfalls Äthergruppen aufweisenden Hydroxyalkylaminen des Molekulargewichtsbereichs 61 bis 2000 oder derer Salze mit anorganischen oder organischen Säuren als den Wasserdampfdiffusionswiderstand reduzierende Zusätze in Einkomponenten-Beschichtungsmitteln die als Bindemittel mit Luftfeuchtigkeit vernetzbare NCO-Prepolymere enthalten, oder in Zweikomponenten-Beschichtungsmitteln auf Polyurethanbasis, die als Bindemittel Gemische aus organischen Polyisocyanaten und Verbindungen mit gegenüber Isocyanatgruppen reaktionsfähigen Wasserstoffatomen enthalten.

Zu den bevorzugten erfindungsgemässen Zusatzmitteln gehören

1. Hydroxyalkylamine des Molekulargewichtsbereichs 61 bis 300 der Formel

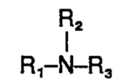

in welcher

$R_1$ für Wasserstoff, einen $C_1$–$C_4$-Alkylrest oder einen Hydroxyalkylrest mit 2 bis 4 Kohlenstoffatomen steht, wobei im letztgenannten Fall zwischen der Hydroxylgruppe und dem Stickstoffatom mindestens 2 Kohlenstoffatome angeordnet sind,

$R_2$ für Wasserstoff oder eine Hydroxyalkylgruppe mit 2 bis 4 Kohlenstoffatomen steht, wobei zwischen der Hydroxylgruppe und dem Stickstoffatom mindestens 2 Kohlenstoffatome angeordnet sind und

$R_3$ für eine Hydroxylgruppe mit 2 bis 4 Kohlenstoffatomen steht, wobei zwischen dem Sauerstoffatom und dem tertiären Stickstoffatom mindestens zwei Kohlenstoffatome angeordnet sind,

oder Salze derartiger Hydroxyalkylamine mit anorganischen oder organischen Säuren der nachstehend beispielhaft genannten Art; und insbesondere

2. Salze von Äthergruppen aufweisenden Hydroxyalkylaminen des Molekulargewichtsbereichs 163 bis 2000, vorzugsweise 1000 bis 1500, wie sie in an sich bekannter Weise durch Alkoxylierung von mindestens eine =N–H-Gruppe vorzugsweise mindestens 2 an Stickstoff gebundene Wasserstoffatome aufweisenden Startermolekülen zugänglich sind, mit anorganischen oder organischen Säuren der nachstehend beispielhaft genannten Art.

Geeignete Hydroxyalkylamine der obengenannten Formel sind beispielsweise Äthanolamin, Diätahnolamin, Triäthanolamin, 2-Hydroxypropylamin, Bis-(2-hydroxypropyl)-amin, N-Methyl-diäthanolamin oder N-Äthyl-di-(2-hydroxypropyl)-amin.

Geeignete Äthergruppen aufweisende Hydroxyalkylamine sind insbesondere die an sich bekannten Anlagerungsprodukte von Äthylenoxid und/oder Propylenoxid an mindestens eine =N–H-Gruppe vorzugsweise mindestens 2 an Stickstoff gebundene Wasserstoffatome aufweisende Amine, wobei die Alkoxylierung über die Stufe der obengenannten Hydroxyalkylamine hinaus zu Äthergruppen aufweisenden Hydroxyalkylaminen führt. Geeignete Startermoleküle sind beispielsweise Ammoniak, Methylamin, Äthylendiamin, Hexamethyldiamin oder aber auch die obengenannten, keine Äthergruppen aufweisenden Aminoalkohole, die ihrerseits intermediär bei der Alkoxylierung der letztgenannten Monoamine entstehen.

Die unter 1. genannten Aminoalkohole werden als solche oder in Form von Salzen, die unter 2. genannten Aminopolyäther vorzugsweise in Form von Salzen mit anorganischen oder organischen Säuren eingesetzt. Zur Salzbildung geeignete Säuren sind beliebige anorganische oder organische Säuren vorzugsweise eines über 2, insbesondere über 4 pK-Werts wie z. B. Phosphorsäure, Essigsäure, Benzoesäure, Buttersäure, Hexancarbonsäure oder 2-Äthylhexansäure. Benzoesäure und 2 Äthylhexansäure sind besonders bevorzugt.

Die erfindungsgemässen Zusatzmittel werden den Ein- bzw. Zweikomponenten-Polyurethan-Systemen in Mengen von 1–20, vorzugsweise 5–10 Gew.-%, bezogen auf den Bindemittelanteil der gebrauchsfertigen Polyurethanmasse, zugesetzt.

Die erfindungswesentlichen Zusatzmittel eignen sich sowohl für lösungsmittelfreie als auch für lösungsmittelhaltige, für Beschichtungszwecke einzusetzende Polyurethansysteme, die als Bindemittel mit Luftfeuchtigkeit vernetzbare NCO-Präpolymere (Einkomponenten-Systeme) oder Gemische aus organischen Polyisocyanaten und Verbindungen mit gegenüber Isocyanatgruppen reaktionsfähigen Wasserstoffatomen (Zweikomponenten-Systeme) enthalten. Derartige Polyurethanlacke bzw. Beschichtungsmassen sind bekannt und in allen Einzelheiten in der Literatur beschrieben (vgl. z. B. Kunststoff-Handbuch, Band VII, «Polyurethane», Carl Hanser Verlag München (1966), Seiten 21 ff.; GB-PS 1 411 434, DE-AS 1 494 465, DE-OS 1 225 274, DE-AS 2 304 893, DE-OS 2 313 004, US-PS 3 267 078, US-PS 3 351 573 oder DE-AS 1 931 053). Vorzugsweise handelt es sich bei den erfindungsgemäss zu modifizierenden Beschichtungsmitteln um solche auf Basis von Polyisocyanaten mit aliphatisch, cycloaliphatisch oder araliphatisch gebundenen Isocyanatgruppen, obwohl auch Beschichtungsmittel auf Basis von Polyisocyanaten mit aromatisch gebundenen Isocyanatgruppen eingesetzt werden können. Reaktionspartner für die Polyisocyanate entweder bei der Herstellung der NCO-Präpolymeren oder in den genannten Zweikomponenten-Systemen sind vorzugsweise die in der Polyurethanlacktechnologie üblichen Polyesterpolyole, Polyätherpolyole oder Polyhydroxypolyacrylate. Auch Expoxidharze können insbesondere in Zweikomponenten-Systemen mitverwendet werden.

Bei der erfindungsgemässen Verwendung der erfindungswesentlichen Zusatzmittel muss bezüglich der Mengenverhältnisse der Bindemittelkomponenten dem Umstand Rechnung getragen werden, dass auch die erfindungsgemäss einzusetzenden Zusatzmittel gegenüber Isocyanatgruppen reaktionsfähige Wasserstoffatome aufweisen. Dies bedeutet, dass in Einkomponenten-Systemen stets ein Überschuss an NCO-Gruppen gegenüber den gegenüber Isocyanatgruppen reaktionsfähigen Gruppen der Zusatzmittel vorliegen muss, und das in Zweikomponenten-Systemen die Menge der Polyisocyanat-Komponente bei Vorliegen hoher Konzentrationen an, von den Zusatzmitteln herrührenden, Isocyanat-reaktiven Gruppen entsprechend erhöht werden muss.

In den Beschichtungsmitteln können neben den erfindungswesentlichen Zusatzstoffen die üblichen Hilfs- und Zusatzmittel, wie sie beispielsweise in den obengenannten Literaturstellen beschrieben sind, mitverwendet werden.

Die erfindungsgemäss modifizierten Beschichtungsmittel eignen sich insbesondere zur Herstellung von Anstrichen auf mineralischen Baustoffoberflächen, bei denen eine gute Wasserdampfdiffusion gewährleistet sein muss.

Die nachstehenden Beispiele dienen zur weiteren Erläuterung der Erfindung. Alle Prozentangaben beziehen sich auf Gewichtsprozente.

In den nachfolgenden Beispielen wurden folgende erfindungswesentliche Zusatzstoffe eingesetzt:

Zusatzmittel A

Benzoesäuresalz eines Ethoxylierungsproduktes von Ammoniak; Molgewicht des Produktes: ca. 1300.

Zusatzmittel B

Propoxylierungsprodukt des Methylamins; Molgewicht: ca. 1200.

Zusatzmittel C

Triethanolamin.

Für die Herstellung der Beschichtungsmassen wurden folgende Rohstoffe eingesetzt:

Polyisocyanat 1

Im wesentlichen aus Tris-(isocyanatohexyl)-biuret bestehendes Biuret-Polyisocyanat-Gemisch, hergestellt durch Biuretisierung von Hexamethylendiisocyanat. Der NCO-Gehalt des 75%ig in Ethylenglykolmonoethyletheracetat gelösten Produktes beträgt ca. 16,5%.

Polyisocyanat 2

Freie NCO-Gruppen enthaltendes, aromatisches Urethan-Polyisocyanat, hergestellt durch Umsetzung von 3 Mol Toluylendiisocyanat mit 1 Mol Trimethylolpropan. Der NCO-Gehalt der 75%igen Lösung in Ethylacetat beträgt ca. 13%.

Polyisocyanat 3

Durch Luftfeuchtigkeit härtendes, freie NCO-Gruppen aufweisendes aliphatisches Urethan-Polyisocyanat, das im wesentlichen aus dem Umsetzungsprodukt eines Tris-(isocyanatohexyl)-biurets mit einem 2% OH enthaltenden gesättigten Phthalsäure-Trimethylolpropan-Polyester besteht. Der NCO-Gehalt der 60%igen Lösung in Ethylenglykolmonoethyletheracetat/Xylol (1 : 1) beträgt ca. 9,5%.

Polyalkohol I

Gesättigter Polyester mit etwa 8% freien Hydroxylgruppen aus Phthalsäure und Trimethylolpropan.

Polyalkohol II

Hydroxyfunktionelles Polyacrylatharz, hergestellt durch Copolymerisation von Acrylsäurebutylester, 2-Hydroxy-propylmethacrylat und Monostyrol. Der OH-Gehalt des Festharzes liegt bei ca. 2,7%.

Polyalkohol III
Gesättigter, 4% Hydroxylgruppen enthaltender, mit 25% gesättigter Fettsäure modifizierter Polyester, im übrigen enthaltend ca. 40% Trimethylolpropan und ca. 35% Phthalsäure.

Polyalkohol IV
Polypropylenglykol mit einem Hydroxylgehalt von ca. 3,5%.

Polyalkohol V
Gesättigter Polyester mit ca. 8,8% freien Hydroxylgruppen, hergestellt aus einem Gemisch von Phthalsäure und Adipinsäure, verestert mit Trimethylolpropan.

Beschichtungsstoffe gemäss der folgenden Beispiele 1–7 wurden auf ebene Polyethylenplatten im Spritzverfahren so aufgetragen, dass sie eine durchschnittliche Trockenfilmschicht von etwa 0,11 mm ergaben. Nach einer Trockenzeit von 4 Wochen bei Raumtemperatur wurden die Filme mechanisch vom Untergrund abgehoben und gemäss der DIN-Vorschrift 52 615 der Wasserdampfdiffusionswiderstandsfaktor μ ermittelt.

Beispiel 1

Ein Polyurethanfilm, hergestellt aus einer Beschichtungsmasse der Formulierung

| | |
|---|---|
| Polyalkohol I | 100 Gewichtsteile |
| Pigment (Titandioxid Rutil) | 152 Gewichtsteile |
| Verlaufmittel (Polyacrylatharz oder Celluloseacetobutyrat) | 1 Gewichtsteil |
| Beschleuniger (Zinkoctoat) | 0,4 Gewichtsteile |
| Lösungsmittel: Ethylenglykolmonoethyletheracetat | 102 Gewichtsteile |
| Polyisocyanat 1 | 120 Gewichtsteile |

hat einen Wasserdampfdiffusionswiderstandsfaktor μ, gemessen nach DIN 52 615 von ca. 55 000. Bei Zugabe von 9,5 Gewichtsteilen Zusatzmittel A reduziert sich der μ-Wert auf ca. 25 000. Bei Zugabe von 19 Gewichtsteilen wurden folgende Werte gemessen:

| | ohne Zugabe | mit 10% Zusatzmittel A |
|---|---|---|
| μ-Wert | 55 000 | 12 000 |
| Staubtrocknung | 8 Stunden | 7 Stunden |
| Erichsenwert | 9mm (Blechriss) | 9 mm (Blechriss) |

Beispiel 2

Ein Polyurethanfilm, hergestellt aus einer Beschichtungsmasse der Formulierung

| | |
|---|---|
| Polyalkohol II | 100 Gewichtsteile |
| Pigment (Titandioxid Rutil) | 65 Gewichtsteile |
| Verlaufmittel: Celluloseacetobutyrat | 0,65 Gewichtsteile |
| Lösungsmittel: Ethylenglykolmonoethyletheracetat | 120 Gewichtsteile |
| Polyisocyanat 1 | 40 Gewichtsteile |

hat einen Wasserdampfdiffusionswiderstandsfaktor μ von ca. 23 000. Durch Zugabe von 13 Gewichtsteilen des Zusatzmittels A wird der μ-Wert auf etwa 11 000 reduziert. Die Trocknungszeiten der Beschichtung sowie die Lösungsmittelfestigkeit bleiben unbeeinflusst. Ebenso liegt der Erichsenwert oberhalb des Blechrisses, also 9,0 mm.

Gleiches Verhalten wurde festgestellt bei hydroxyfunktionellen Polyacrylatharzen mit OH-Gehalten von 3,5 bzw. 4,1%.

Beispiel 3

Ein Polyurethanfilm, hergestellt aus einer Beschichtungsmasse der Formulierung

| | |
|---|---|
| Polyalkohol III | 100 Gewichtsteile |
| Pigment (Titandioxid Rutil) | 80 Gewichtsteile |
| Verlaufmittel: Celluloseacetobutyrat | 0,8 Gewichtsteile |
| Beschleuniger: Zinkoctoat | 0,3 Gewichtsteile |
| Lösungsmittel: Ethylenglykolmonoethyletheracetat | 135 Gewichtsteile |
| Polyisocyanat 1 | 75 Gewichtsteile |

hat einen Wasserdampfdiffusionswiderstandsfaktor μ von ca. 45 000. Durch Zugabe von 15,6 Gewichtsteilen Zusatzmittel A reduziert sich der μ-Wert auf ca. 15 000. Die Trocknungszeit von ca. 8 Stunden bleibt unverändert, ebenso wird mit wie auch ohne Verwendung von Zusatzmittel A die charakteristische Lösungsmittelfestigkeit der Filme nach 14 Tage langer Trocknung erreicht. Der Erichsenwert der Filme erreicht in beiden Fällen Werte oberhalb des Blechrisses.

Beispiel 4

Ein Polyurethanfilm, hergestellt aus einer Beschichtungsmasse der Formulierung

| | |
|---|---|
| Polyalkohol V | 100 Gewichtsteile |
| Pigment (Titandioxid Rutil) | 112,5 Gewichtsteile |
| Verlaufmittel: Celluloseacetobutyrat | 1,2 Gewichtsteile |
| Lösungsmittel: Ethylenglykolmonoethyletheracetat | 181 Gewichtsteile |
| Polyisocyanat 2 | 168 Gewichtsteile |

hat einen μ-Wert von etwa 35 000. Durch Zugabe von 22,5 Gewichtsteilen Zusatzmittel A reduziert sich der Wert auf etwa 18 000. Die Staubtrocknung der aufgetragenen Filme bleibt unverändert im Bereich von etwa 4 Stunden, die charakteristische Lösungsmittelfestigkeit wird jedoch statt nach 6tägiger Trocknung schon nach 3 Tagen erreicht.

Beispiel 5

Ein Polyurethanfilm, hergestellt aus einer Beschichtungsmasse der Formulierung

| | |
|---|---|
| Polyalkohol IV | 100 Gewichtsteile |
| Vinylcopolymeres | 50 Gewichtsteile |
| Pigment (Titandioxid Rutil) | 340 Gewichtsteile |
| Füllstoff: Bariumsulfat | 422 Gewichtsteile |
| Lösungsmittel: Ethylenglykolmonoethyletheracetat | 571 Gewichtsteile |
| Polyisocyanat 2 | 205 Gewichtsteile |

hat einen μ-Wert von ca. 25 000. Durch Zugabe von

25,3 Gewichtsteilen Zusatzmittel A reduziert sich der µ-Wert auf ca. 5000. Die Staubtrockenzeit der Filme wird von 2 auf 1 Stunde reduziert und die charakteristische Lösungsfestigkeit der Filme statt nach 14tägiger schon nach 6tägiger Trocknung erreicht. Die Elastizität dieses verhältnismässig harten, als Grundierung formulierten Filmes wird messbar verbessert. So steigen die Erichsenwerte von 1,5 mm auf den Wert von ca. 4 mm.

Beispiel 6

Die µ-Werte eines Polyurethanfilmes, hergestellt aus einer Beschichtungsmasse der Formulierung

| | |
|---|---|
| Polyalkohol I | 100 Gewichtsteile |
| Pigment (Titandioxid Rutil) | 152 Gewichtsteile |
| Verlaufmittel: Celluloseacetobutyrat | 1 Gewichtsteile |
| Beschleuniger: Zinkoctoat | 0,4 Gewichtsteile |
| Lösungsmittel: Ethylenglykolmonoethyletheracetat | 102 Gewichtsteile |
| Polyisocyanat 1 | 120 Gewichtsteile |

liegen im Bereich von ca. 55 000. Durch Zugabe von 9,5 Gewichtsteilen Zusatzmittel B oder C wird der µ-Wert auf ca. 20 000 reduziert. Die Staubtrockenzeit wird geringfügig von 8 auf 7 Stunden reduziert, die Zeit bis zum Erreichen der charakteristischen Lösungsmittelbeständigkeit bleibt mit 2 Tagen unverändert.

Beispiel 7

Die µ-Werte eines durch Einfluss von Luftfeuchtigkeit gehärteten Polyurethanfilmes, hergestellt aus einer Beschichtungsmasse der Formulierung

| | |
|---|---|
| Polyisocyanat 3 | 100 Gewichtsteile |
| Pigment (Titandioxid Rutil) | 30 Gewichtsteile |
| Verlaufmittel: Polyacrylatharz | 0,03 Gewichtsteile |
| Beschleuniger: Dibutylzinndilaurat | 0,06 Gewichtsteile |
| Trocknungsmittel für Pigment: Toluylsulfonylmonoisocyanat | 3,75 Gewichtsteile |
| Lösungsmittel: Ethylenglykolmonoethyletheracetat | 16 Gewichtsteile |

liegen im Bereich von ca. 45 000. Durch Zugabe von 6 Gewichtsteilen Zusatzmittel A reduziert sich der µ-Wert auf ca. 17 000. Die Staubtrockenzeit wird von 8 auf 5 Stunden reduziert und die Filme zeigen ihre charakteristische Lösungsmittelfestigkeit statt nach 14 Tagen schon nach etwa 3 Tagen. Der Erichsenwert der Filme bleibt unverändert oberhalb des Blechrisses.

## Patentanspruch

Verwendung von gegebenenfalls Äthergruppen aufweisenden Hydroxyalkylaminen des Molekulargewichtsbereichs 61 bis 2000 oder deren Salzen mit anorganischen oder organischen Säuren als den Wasserdampfdiffusionswiderstand reduzierende Zusätze in Einkomponenten-Beschichtungsmitteln, die als Bindemittel mit Luftfeuchtigkeit vernetzbare NCO-Präpolymere enthalten, oder in Zweikomponenten-Beschichtungsmitteln auf Polyurethanbasis, die als Bindemittel Gemische aus organischen Polyisocyanaten und Verbindungen mit gegenüber Isocyanatgruppen reaktionsfähigen Wasserstoffatomen enthalten.

## Claim

Use of hydroxy alkyl amines optionally containing ether groups and having a molecular weight in the range of 61 to 2000 or their salts with inorganic or organic acids as additives which reduce resistance to the diffusion of water vapour in one-component coating compositions which contain as binders NCO prepolymers crosslinkable with atmospheric moisture, or in two-component coating compositions based on polyurethane which contain as binders mixtures of organic polyisocyanates and compounds containing isocyanate-reactive hydrogen atoms.

## Revendication

Utilisation d'hydroxyalkylamines comportant éventuellement des groupes éther d'un poids moléculaire se situant dans l'intervalle allant de 61 à 2 000, ou de leurs sels avec des acides organiques ou inorganiques comme additifs réduisant la résistance à la diffusion de la vapeur d'eau dans des agents d'enduction à un seul composant contenant, comme agents liants, des prépolymères de NCO réticulables avec l'humidité de l'air, ou dans des agents d'enduction à deux composants à base de polyuréthanes contenant, comme agents liants, des mélanges de polyisocyanates organiques et de composés comportant des atomes d'hydrogène réactifs vis-à-vis des groupes isocyanate.